# EUROPÄISCHE PATENTSCHRIFT

(11) **EP 2 247 434 B1**
(45) Veröffentlichungstag und Bekanntmachung des Hinweises auf die Patenterteilung: **07.09.2011**
(21) Anmeldenummer: 09713372.2
(22) Anmeldetag: 19.02.2009
(51) Int. Cl.: B29C 70/50, B29C 70/22

(54) **VERFAHREN UND VORRICHTUNG ZUR HERSTELLUNG FASERVERSTÄRKTER KUNSTSTOFFPROFILTEILE SOWIE DADURCH FASERVERSTÄRKTES KUNSTSTOFFPROFILTEIL**
METHOD AND DEVICE FOR PRODUCING FIBER-REINFORCED PLASTIC PROFILE PARTS AND PLASTIC PROFILE PART OBTAINED THEREBY
PROCÉDÉ ET DISPOSITIF DE PRODUCTION DE PROFILÉS EN PLASTIQUE RENFORCÉS PAR DES FIBRES ET PROFILÉ EN PLASTIQUE RENFORCÉ OBTENU

(30) Priorität: 21.02.2008 DE 102008010228; 21.02.2008 US 30413
(43) Veröffentlichungstag der Anmeldung: 10.11.2010
(73) Patentinhaber: Airbus Operations GmbH, 21129 Hamburg (DE)
(72) Erfinder: BECHTOLD, Michael, 71297 Mönsheim (DE)
(74) Vertreter: Peckmann, Ralf
(86) Internationale Anmeldenummer: PCT/EP2009/051985
(87) Internationale Veröffentlichungsnummer: WO 2009/103768

(56) Entgegenhaltungen:
- WO-A-92/13706
- US-A- 5 043 128
- US-A- 5 320 696
- US-A- 5 468 327

## Beschreibung

Die vorliegende Erfindung betrifft ein verfahren und eine Vorrichtung zum Herstellen eines faserverstärkten Kunststoffprofilteils, insbesondere eines Kunststoffprofilteils für ein Luft- oder Raumfahrzeug.

Obwohl auf faserverstärkte Kunststoffprofilteile mit beliebigen Profilformen anwendbar, werden die vorliegende Erfindung sowie die ihr zugrunde liegende Problematik in Bezug auf die Herstellung von Kunststoffprofilteilen mit I- und T-Profil erläutert.

Bei einem herkömmlichen Verfahren zur Herstellung solcher Kunststoffprofilteile, das auch als Pultrusion bezeichnet wird, wird ein Faserbündel mit einem wärmeaushärtbaren Harz imprägniert und durch eine beheizte Formgebungsdüse mit dem gewünschten Profil gezogen, wobei das Harz härtet. In auf diese Weise hergestellten Kunststoffprofilteilen verlaufen die Fasern im Wesentlichen in Längsrichtung der Kunststoffprofilteile, so bei entsprechender Belastung auftretende Torsions- oder Schälspannungen einen Bruch des Harzes zwischen parallel verlaufenden Fasern verursachen können.

Bei der sogenannten Flechtpultrusion wird statt eines Bündels unidirektionaler Fasern ein Fasergeflecht verwendet, in dem die Fasern wendelartig mit einem Neigungswinkel zur Längsrichtung des Kunststoffprofilteils verlaufen und auf diese Weise auch Torsions- und Schälspannungen aufnehmen. Beim Einziehen eines solchen Fasergeflechts aus miteinander verkreuzten Fasern in die Formgebungsdüse treten jedoch erhebliche Reibungskräfte auf, die die Fasern schädigen und zu Qualitätsmängeln führen können. US-A- 5043 128 offenbart die Merkmale des Oberbegriffs der Ansprüche 1 und 15.

Es ist daher Aufgabe der vorliegenden Erfindung, bei der Herstellung faserverstärkter Kunststoffprofilteile eine hohe Stabilität insbesondere gegenüber Torsions- und Schälspannungen zu erreichen, und dabei eine Beschädigung der Fasern zuverlässig zu vermeiden.

Erfindungsgemäß wird diese Aufgabe durch ein Verfahren zum Herstellen eines faserverstärkten Kunststoffprofilteils mit den Merkmalen des Patentanspruchs 1 sowie durch eine Vorrichtung zur Herstellung eines faserverstärkten Kunststoffprofilteils mit den Merkmalen des Patentanspruchs 16 gelöst.

Die der vorliegenden Erfindung zugrunde liegende Idee besteht darin, die bei der Herstellung des Kunststoffprofilteils verwendeten Fasern in Form eines schlauchförmigen Geflechts zuzuführen, in dem ein Matrixkunststoff verteilt angeordnet ist. Ein Längenabschnitt des zugeführten Fasergeflechts wird in einer heizbaren Presse eingeschlossen. Die Presse wird geheizt und erwärmt auf diese Weise den eingeschlossenen Längenabschnitt. Dies hat zur Folge, dass der Matrixkunststoff erweicht (falls dieser in fester Form vorliegt) und infolge des von der Presse aufgebauten Drucks die Zwischenräume zwischen den Fasern ausfüllt. Im Falle eines duroplastischen Harzes härtet der Matrixkunststoff unter dem Einfluss des Heizens der Presse aus.

Die Presse wird sodann geöffnet, so dass diese den Längenabschnitt des Fasergeflechts nicht mehr einschließt und keine Presswirkung mehr auf diesen ausübt. Das Fasergeflecht wird soweit durch die geöffnete Presse gezogen, bis ein weiterer Längenabschnitt des Fasergeflechts in der Presse angeordnet ist. Die Presse schließt nunmehr diesen weiteren Längenabschnitt ein, so dass nun der Matrixkunststoff im weiteren Längenabschnitt unter dem Einfluss der beheizten Presse zwischen den Fasern verteilt bzw. ausgehärtet wird.

Auf diese Weise wird das Fasergeflecht sowohl im Bereich des erstgenannten Längenabschnitts als auch im weiteren Längenabschnitt in der Kunststoffmatrix eingebettet, so dass in beiden Längenabschnitten entsprechende Abschnitte eines faserverstärkten Kunststoffprofilteils entstehen. Dies ermöglicht, ein Kunststoffprofilteil von prinzipiell unbegrenzter Länge herzustellen, indem man die Schritte des Einschließens des Fasergeflechts in der Presse, des Öffnens der Presse und des ziehens des Fasergeflechts zyklisch wiederholt und dabei das Fasergeflecht jeweils um eine Strecke durch die geöffnete Presse zieht, die nicht größer als der jeweils in der Presse eingeschlossene Längenabschnitt ist.

Da die Fasern in Form eines schlauchförmigen Fasergeflechts zugeführt werden, verläuft im fertigen Kunststoffprofilteil zumindest ein Teil der Fasern in einem Neigungswinkel um den Umfang des Kunststoffprofilteils, hat also einen Richtungsanteil in Umfangsrichtung. Daher weisen die so hergestellten Kunststoffprofilteile eine besonders hohe Stabilität auf. Da das Fasergeflecht durch die Presse gezogen wird, wenn diese geöffnet ist, sind beim ziehen keine oder nur sehr geringe Reibungskräfte zu überwinden, was ermöglicht, Beschädigungen der Fasern effektiv zu vermeiden. Weiterhin wird ermöglicht, die zugspannung auf einen definierten, niedrigen Wert festzusetzen, so dass auch Fasergeflechte verarbeitet werden können, bei denen Fasern unter einem großen Winkel zur Längenrichtung der Schlauchform des Geflechts verlaufen, ohne dass das Geflecht durch große Zugspannungen verzerrt oder in die Länge gezogen würde.

Da das Fasergeflecht ohne aufwändige manuelle Tätigkeiten hergestellt werden kann, ist das gesamte Verfahren besonders leicht zu automatisieren.

Gemäß einer bevorzugten Weiterbildung umfasst das zuführen des schlauchförmigen Fasergeflechts einen Schritt des Flechtens des Fasergeflechts aus einer Vielzahl von Faserfäden. Das Vorschalten des Flechtvorgangs ermöglicht, Kunststoffprofile nach Bedarf kontinuierlich herzustellen, ohne dass eine Vorratshaltung vorgefertigter Fasergeflechte notwendig ist.

Gemäß einer bevorzugten Weiterbildung presst die Presse den Längenabschnitt beim Einschließen entsprechend einem Zielprofil des Kunststoffprofilteils. Dabei ist weiterhin ein Verfahrensschritt des allmählichen Umformens des schlauchförmigen Fasergeflechts in das Zielprofil durch eine Vielzahl von Umformrollen vorgesehen. Auf diese Weise lassen sich vielfältige Profilformen auf Grundlage des ursprünglich schlauchförmigen Fasergeflechts herstellen, ohne das große Reibungskräfte auftreten oder Beschädigungen von Fasern zu erwarten sind.

Gemäß einer bevorzugten Weiterbildung wird das schlauchförmige Fasergeflecht beim Umformen flachgedrückt. Dies ermöglicht vorteilhaft die Herstellung von Kunststoffprofilteilen mit Vollprofil, d.h. ohne eingeschlossenen Hohlraum.

Gemäß einer bevorzugten Weiterbildung wird eine Vielzahl von schlauchförmigen Fasergelegen zugeführt und im Längenabschnitt gemeinsam von der Presse eingeschlossen. Auf diese Weise wird eine noch größere Vielfalt an Profilformen wie ermöglicht z.B. mehrfach verzweigte Profilformen.

Gemäß einer bevorzugten Weiterbildung wird der Matrixkunststoff im schlauchförmigen Fasergeflecht durch Einflechten thermoplastischer Fasern verteilt angeordnet. Auf diese Weise erfolgt das Verteilen des Matrixkunststoffs automatisch mit dem Flechtvorgang, so dass ein separater Schritt entfällt.

Gemäß einer bevorzugten Weiterbildung wird der Matrixkunststoff im schlauchförmigen Fasergeflecht durch Einlegen eines Harzfilms in den Schlauch angeordnet. Der Matrixkunststoff ist im Inneren des Schlauchs sicher gehalten und durch die flächenhafte Ausdehnung des Films gleichmäßig verteilt.

Gemäß einer bevorzugten Weiterbildung wird der Matrixkunststoff im schlauchförmigen Fasergeflecht durch Benetzen des Fasergeflechts mit einem flüssigen oder pulverförmigen Harz angeordnet. Dies ermöglicht eine in drei Dimensionen gleichmäßige Verteilung des Matrixkunststoffs.

Gemäß einer bevorzugten Weiterbildung wird das schlauchförmige Fasergeflecht als Prepreg zugeführt. Auf diese Weise kann das Fasergeflecht mit darin verteiltem Matrixkunststoff getrennt vorproduziert und nach Bedarf den weiteren Verfahrensschritten zugeführt werden.

Gemäß einer bevorzugten Weiterbildung wird der Längenabschnitt in der Presse teilweise ausgehärtet. Dies ermöglicht, den Matrixkunststoff abschließend auf eine andere Weise in einem Bereich auszuhärten, der sich nicht auf den Längenabschnitt beschränkt, so dass ein Kunststoffprofilteil wesentlich ohne Übergänge zwischen benachbarten Längenabschnitten hergestellt werden kann. Vorzugsweise wird der Längenabschnitt zu etwa 70% teilausgehärtet, so dass die Profilform nach dem Verlassen der Presse stabil bleibt. Vorzugsweise ist ein weiterer Verfahrensschritt des vollständigen Aushärtens des Längenabschnitts nach dem Ziehen durch die Presse vorgesehen, so dass das Kunststoffprofilteil möglichst bald vollständig stabilisiert wird.

Gemäß einer bevorzugten Weiterbildung ist weiterhin ein Verfahrensschritt des Entgratens des Kunststoffprofilteils vorgesehen. Dies ermöglicht, die Grenzen zwischen benachbarten Längenabschnitten ohne äußere Grate übergangslos zu fertigen.

Gemäß einer bevorzugten Weiterbildung ist weiterhin ein Verfahrensschritt des wesentlich longitudinalen Zerschneidens des Kunststoffprofilteils zur Bildung weiterer Kunststoffprofilteile vorgesehen. Dies ermöglicht die Herstellung von Kunststoffprofilteilen mit über ihre Länge veränderlichen Profilquerschnitten.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine schematische Perspektivansicht einer Vor- richtung zur Herstellung eines faserverstärkten Kunststoffprofils gemäß einer Ausführungsform der Erfindung;
- Fig. 2A-F: Querschnittsansichten verschiedener Umformsta- dien eines schlauchförmigen Fasergeflechts bei einem Herstellungsverfahren gemäß einer Ausfüh- rungsform;
- Fig. 3A-B: Querschnittsansichten zweier Umformstadien bei einem Herstellungsverfahren gemäß einer weiteren Ausführungsform;
- Fig. 4A-B: Querschnittsansichten einer Presse bei der Aus- führung eines Herstellungsverfahrens gemäß einer Ausführungsform;
- Fig. 5A-B: eine Profil- und eine Seitenansicht eines faser- verstärkten Kunststoffprofilteils gemäß einer Ausführungsform;
- Fig. 5C-D: eine Profil- und eine Seitenansicht des Kunst- stoffprofilteils aus Fig. 5A-B nach Ausführung eines Schnitts gemäß einer Ausführungsform des Herstellungsverfahrens; und
- Fig. 5E: eine Seitenansicht eines weiteren faserverstärk- ten Kunststoffprofilteils gemäß einer Ausfüh- rungsform.

In den Figuren bezeichnen dieselben Bezugszeichen gleiche oder funktionsgleiche Komponenten, soweit nichts Gegenteiliges angegeben ist.

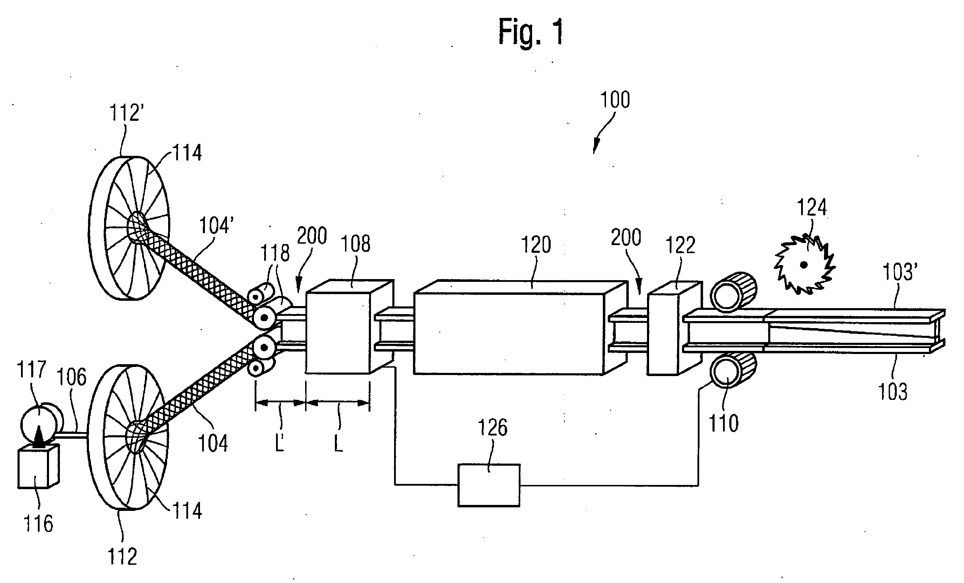

Figur 1 zeigt in schematischer Perspektivansicht eine Vorrichtung 100 zur Herstellung von faserverstärkten Kunststoffprofilen 102, 103, 103'. Die Vorrichtung 100 umfasst eine erste 112 und eine zweite 112' Flechteinrichtung zum Flechten je eines schlauchförmigen Fasergeflechts 104, 104' aus einer jeweiligen Vielzahl von Faserfäden 114, 114'. Ein Harzfilmleger 116 führt der ersten Flechteinrichtung 112 von einer Endlosrolle 117 einen streifenförmigen Film 106 aus einem unausgehärteten Harz 106 zu, so dass dieser im Inneren des schlauchförmigen Geflechts 104 zu liegen kommt.

Die im Betrieb der Vorrichtung von der ersten 112 und zweiten 112' Flechteinrichtung geflochtenen Fasergeflechte 104, 104' laufen an einem System von Umformrollen 118 zusammen, die jedes der Fasergeflechte 104, 104' zunächst plätten und dann beide Fasergeflechte 104, 104' kontinuierlich in eine gemeinsam gebildete I-Profilform 200 umformen, die dem Zielprofil 200 eines herzustellenden Kunststoffprofilteils 102 entspricht. Rein beispielhaft sind vier Umformrollen 118 gezeigt.

Auf der den Flechteinrichtungen 112 abgewandten Seite der Umformrollen 118 ist eine beheizbare Presse 108 angeordnet, die durch eine Steuervorrichtung 126 intermittierend geöffnet und geschlossen werden kann. In geschlossenem Zustand verbleibt im Inneren der Presse 108 ein zu beiden Enden hin offener Hohlraum der Länge L mit dem I-förmigen Zielprofil 200 des herzustellenden Kunststoffprofilteils 102. Im geöffneten Zustand ist der Hohlraum der Länge L weiter als das Zielprofil 200, so dass ein Gegenstand mit dem Zielprofil 200 ohne Reibung durch die Presse bewegt werden kann.

An der den Umformrollen 118 abgewandten Seite der Presse 108 ist der Eingang eines Tunnelofens 120 zum vollständigen Aushärten der herzustellenden Kunststoffprofilteile 102, 103, 103' angeordnet. An den Ausgang des Tunnelofens 120 schließt sich eine Entgrateinrichtung 122 an. Die Umformrollen 118, die Presse 108, der Tunnelofen 120 und die Entgrateinrichtung 122 sind in der beschriebenen Weise linear hintereinander angeordnet und bilden insgesamt eine Fertigungsstrecke 118, 108, 120, 122, entlang derer im Betrieb der Vorrichtung 100 die Fasergeflechte 104, 104' in das zu fertigende Kunststoffprofilteil verarbeitet werden.

An der dem Tunnelofen 120 abgewandten Seite der Entgrateinrichtung ist eine Zieheinrichtung 110 zum Ziehen der Fasergeflechte 104, 104' bzw. des aus ihnen hervorgehenden Kunststoffprofilteils 102 entlang der Fertigungsstrecke 118, 108, 120, 122 angeordnet, welche zur Ansteuerung mit der Steuervorrichtung 126 verbunden ist. An der der Entgrateinrichtung 122 abgewandten Seite der Zieheinrichtung 110 ist eine Schneideeinrichtung 124 zum Ablängen des herzustellenden Kunststoffprofilteils 102 und ggf. weiterer Verarbeitung in weitere Kunststoffprofilteile 103, 103' angeordnet.

Im Betrieb der Vorrichtung 100 steuert die Steuervorrichtung 126 die beheizte Presse 108 und die zieheinrichtung 122 in koordinierter Weise zyklisch an. Innerhalb eines Zyklus wird die Presse 108 zunächst geschlossen, um einen Längenabschnitt L der von den Umformrollen 118 in die Zielform 200 gebrachten Fasergeflechte 104, 104' einzuschließen. Dies hat zur Folge, dass der enthaltene Harzfilm 106 erweicht, infolge des von der Presse aufgebauten Drucks die Zwischenräume zwischen den Fasern ausfüllt und unter dem weiteren Einfluss der Heizwärme teilweise aushärtet. Noch bevor das Harz 106 vollständig ausgehärtet ist, wird die Presse 108 geöffnet. Nun steuert die Steuervorrichtung 126 die Zieheinrichtung 110 so an, dass diese das Kunststoffprofilteil 102 bzw. die in diesem enthaltenen Fasergeflechte 104, 104' um eine Strecke der Länge L entlang der Fertigungsstrecke 118, 108, 120, 122, 110 zieht. Anschließend beginnt der Zyklus von neuem, wobei nunmehr ein neuer Längenabschnitt L' in der Presse 108 eingeschlossen wird, der dem im vorhergehenden Zyklus eingeschlossenen Abschnitt L benachbart ist. Im Tunnelofen 120 wird durchgängig eine Temperaturverteilung aufrechterhalten, die bewirkt, dass die in der Presse 108 erst teilweise ausgehärteten, laufend aufeinanderfolgenden Abschnitte L, L' vollständig ausgehärtet werden. Eventuelle Grate zwischen den Abschnitten L, L' werden von der Entgrateinrichtung 122 entfernt.

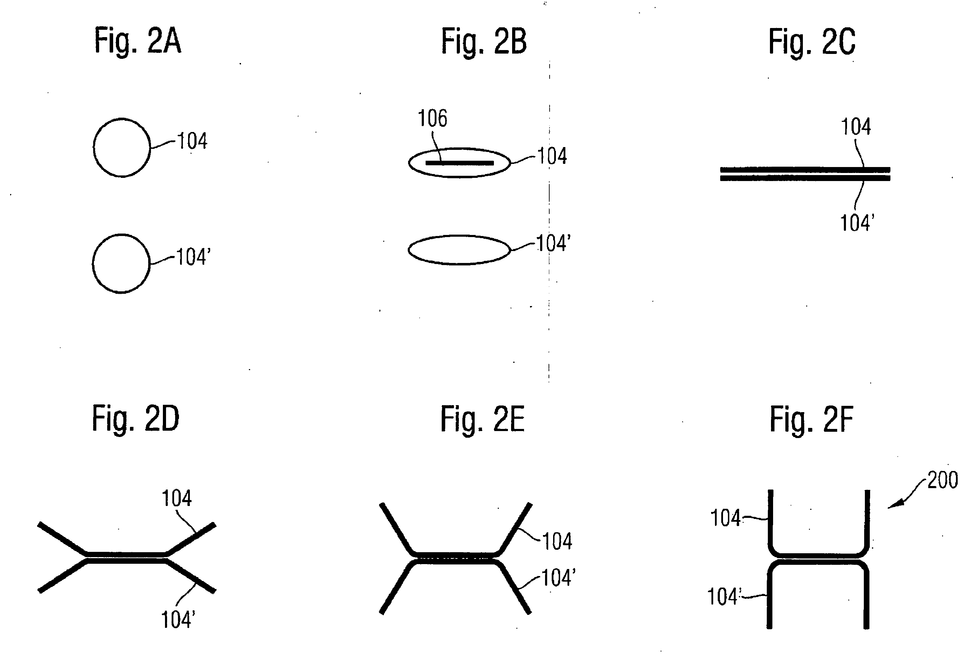

Figur 2A bis 2F zeigen Querschnittsansichten verschiedener Umformstadien zweier schlauchförmiger Fasergeflechte, z.B. mittels der Umformrollen 118 der Vorrichtung 100 aus Fig. 1. Fig. 1A zeigt die Schlauchgeflechte 104, 104' in ihrer zylindrischen Ausgangsform, in der sie von den Flechteinrichtungen geflochten werden. Fig. 2B zeigt die Geflechte in einer ellipsenartig abgeflachten Profilform, wobei ein Harzfilm 106 in eines der Geflechte 104 eingelegt wurde. In Fig. 2C sind beide Geflechte 104, 104 vollständig flach gefaltet und parallel zueinander angeordnet worden. Fig. 2D-F zeigen die graduelle Umformung der Fasergeflechte 104, 104, die sich nunmehr berühren, in ein gemeinsames, I-förmiges Zielprofil 200.

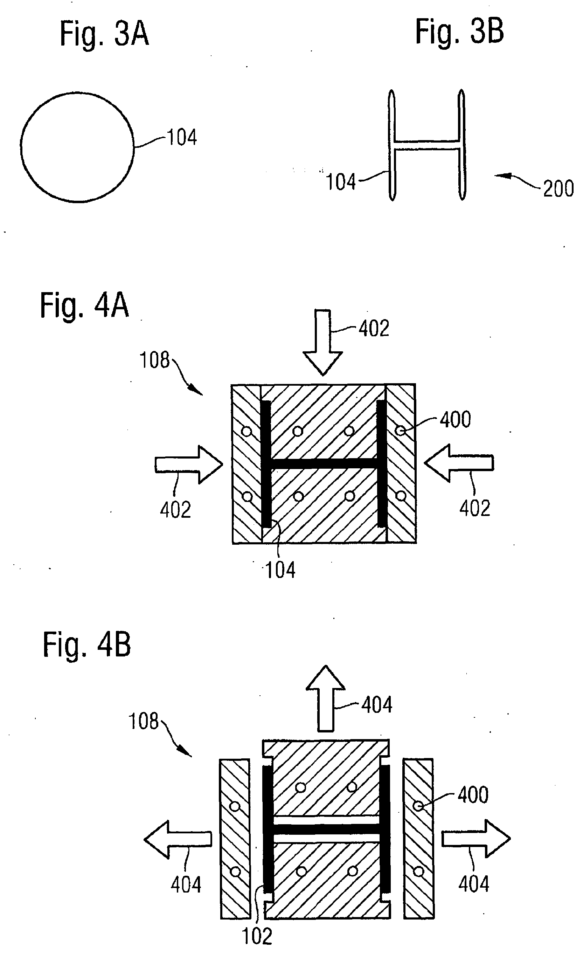

Figur 3A und 3B zeigen Querschnittsansichten zweier Umformstadien für einen alternativen Umformvorgang, bei dem ein einzelnes schlauchförmiges Geflecht 104 über entsprechende Umformrollen in ein beispielhaft ebenfalls I-förmiges Zielprofil 200 umgeformt wird.

Figur 4A und 4B zeigt Querschnittsansichten einer Presse, z.B. der in Fig. 1 gezeigten Presse 108 in unterschiedlichen Stadien des Herstellungszyklus. Fig. 4A zeigt die Presse in einem Zustand nach dem Schließen 402 der Presse, in dem sie den im eingeschlossenen Fasergeflecht 104 verteilten Matrixkunststoff teilweise aushärtet. In den einzelnen Segmenten der Presse sind Heizdrähte 400 angeordnet. Fig. 4B zeigt dieselbe Presse nach dem Öffnen 404.

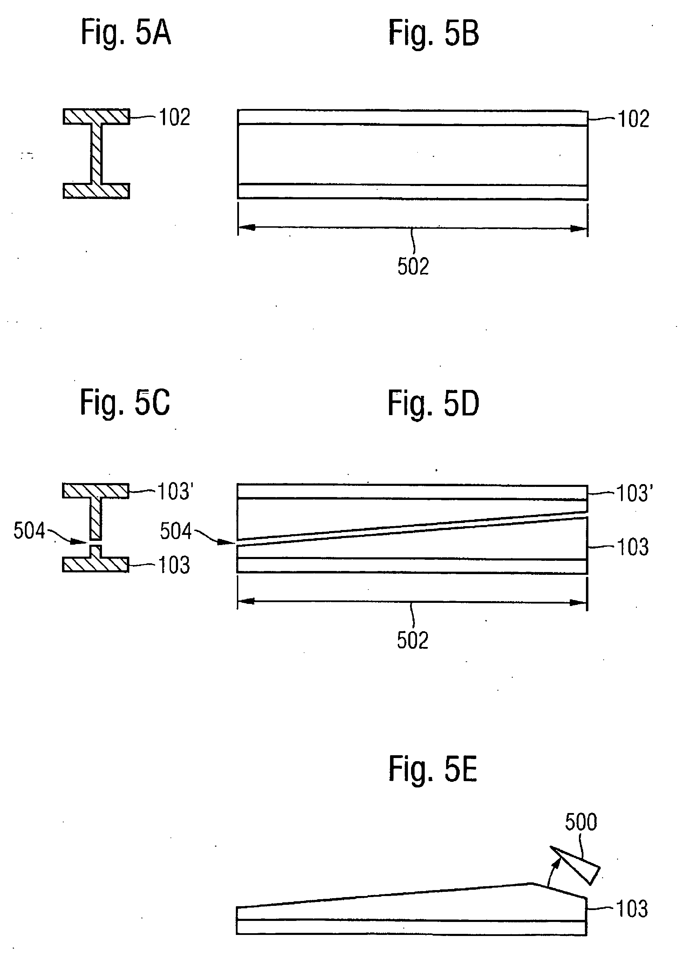

Figur 5A und 5B zeigen eine Profil- bzw. eine Seitenansicht eines faserverstärkten Kunststoffprofilteils 102, z.B. eines mit der Vorrichtung 100 aus Fig. 1 nach dem dort beschriebenen Verfahren hergestellten Kunststoffprofilteils 102, das auf eine benötigte Gesamtlänge 502 abgelängt wurde.

Figur 5C und 5D zeigen eine Profil- bzw. eine Seitenansicht des Kunststoffprofilteils 102 aus Fig. 5A und 5B, das zur Herstellung weiterer, T-förmiger Kunststoffprofilteile 103, 103' mit einem über die Gesamtlänge 502 verlaufenden, leicht geneigten Longitudinalschnitt längs zerteilt wurde. Fig. 5E zeigt eines der Kunststoffprofilteile 103 aus Fig. 5C und 5D, dessen Form durch Abtrennen eines Abfallstücks 500 weiter verändert wurde, z.B. um es für die Verwendung in einem Luft- oder Raumfahrzeug geeignet zu machen.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise können statt eines duroplastischen Harzes thermoplastische Matrixkunststoffe verwendet werden, insbesondere wenn die Presse mit einer Kühleinrichtung zum Abkühlen der Thermoplaste ausgerüstet wird. Geflechte mit zusätzlichen longitudinalen Fasern können ebenso verwendet werden. Profile können aus ineinandergreifenden, gemeinsam geflochtenen Schlauchgeflechten geformt werden.

### Bezugszeichenliste

- 100: Herstellungsvorrichtung
- 102: Kunststoffprofilteil
- 103, 103': Modifiziertes Kunststoffprofilteil
- 104: Fasergeflecht
- 106: Matrixkunststoff
- 108: Presse
- 110: Zieheinrichtung
- 112, 112': Flechteinrichtung
- 114, 114': Faserfäden
- 116: Harzfilmleger
- 117: Harzfilmrolle
- 118: Umformrollen
- 120: Nachaushärteofen
- 122: Entgrateinrichtung
- 124: Schneideeinrichtung
- 126: Steuervorrichtung
- 200: Zielprofil
- 400: Heizeinrichtung
- 402: Schließen der Presse
- 404: Öffnen der Presse
- 500: Abfallstück
- 502: Gesamtlänge
- 504: Longitudinalschnitt

## Patentansprüche

1. Verfahren zum Herstellen eines faserverstärkten Kunststoffprofilteils (102, 103), mit folgenden Verfahrensschritten:
Zuführen eines schlauchförmigen Fasergeflechts (104), in welchem ein Matrixkunststoff (106) verteilt angeordnet ist;
Einschließen (402) eines Längenabschnitts (L) des Fasergeflechts (104) in einer Presse (108);
Heizen der Presse (108);
Öffnen (404) der Presse (108) zum Freigeben des Fasergeflechts (104);
Ziehen des Fasergeflechts (104) durch die geöffnete Presse (108) zum Anordnen eines weiteren Längenabschnitts (L') des Fasergeflechts (104) in der Presse (108); und
Einschließen (402) des weiteren Längenabschnitts (L') in der Presse (108) **dadurch gekennzeichnet, dass** das Zuführen des schlauchförmigen Fasergeflechts (104) einen Schritt des Flechtens des Fasergeflechts (104) aus einer Vielzahl von Faserfäden (114) umfasst.

2. Verfahren nach Anspruch 1,
**dadurch gekennzeichnet,**
**dass** die Presse den Längenabschnitt (L) beim Einschließen entsprechend einem Zielprofil (200) des Kunststoffprofilteils (102) presst, wobei weiterhin ein Verfahrensschritt des allmählichen Umformens des schlauchförmigen Fasergeflechts (104) in das Zielprofil (200) durch eine Vielzahl von Umformrollen (118) vorgesehen ist.

3. Verfahren nach Anspruch 2,
**dadurch gekennzeichnet,**
**dass** das schlauchförmige Fasergeflecht (104) beim Umformen flachgedrückt wird.

4. Verfahren nach wenigstens einem der vorhergehenden Ansprüche,
**dadurch gekennzeichnet,**
**dass** eine Vielzahl von schlauchförmigen Fasergelegen (104, 104') zugeführt und im Längenabschnitt (L) gemeinsam von der Presse (108) eingeschlossen wird.

5. Verfahren nach wenigstens einem der vorhergehenden Ansprüche,
**dadurch gekennzeichnet,**
**dass** der Matrixkunststoff (106) im schlauchförmigen Fasergeflecht (104) durch Einflechten thermoplastischer Fasern verteilt angeordnet wird.

6. Verfahren nach wenigstens einem der vorhergehenden Ansprüche,
**dadurch gekennzeichnet,**
**dass** der Matrixkunststoff (106) im schlauchförmigen Fasergeflecht (104) durch Einlegen eines Harzfilms (106) in den Schlauch (104) angeordnet wird.

7. Verfahren nach wenigstens einem der vorhergehenden Ansprüche,
**dadurch gekennzeichnet,**
**dass** der Matrixkunststoff im schlauchförmigen Fasergeflecht (104) durch Benetzen des Fasergeflechts (104) mit einem flüssigen oder pulverförmigen Harz angeordnet wird.

8. Verfahren nach wenigstens einem der vorhergehenden Ansprüche,
**dadurch gekennzeichnet,**
**dass** das schlauchförmige Fasergeflecht (104) als Prepreg zugeführt wird.

9. Verfahren nach wenigstens einem der vorhergehenden Ansprüche,
**dadurch gekennzeichnet,**
**dass** der Längenabschnitt (L) in der Presse teilweise, insbesondere zu etwa 70%, ausgehärtet wird.

10. Verfahren nach Anspruch 9,
**dadurch gekennzeichnet,**
**dass** weiterhin ein Verfahrensschritt des vollständigen Aushärtens des Längenabschnitts (L) nach dem Ziehen durch die Presse (108) vorgesehen ist.

11. Verfahren nach wenigstens einem der vorhergehenden Ansprüche,
**dadurch gekennzeichnet,**
**dass** weiterhin ein Verfahrensschritt des Entgratens des Kunststoffprofilteils (102, 103) vorgesehen ist.

12. Verfahren nach wenigstens einem der vorhergehenden Ansprüche,
**dadurch gekennzeichnet,**
**dass** weiterhin ein Verfahrensschritt des wesentlich longitudinalen Zerschneidens des Kunststoffprofilteils (102) zur Bildung weiterer Kunststoffprofilteile (103, 103') vorgesehen ist.

13. Faserverstärktes Kunststoffprofilteil (102, 103, 103'), welches gemäß dem Verfahren nach Anspruch 3 hergestellt ist, wobei
dass das Kunststoffprofilteil (102, 103, 103') ein schlauchförmiges Fasergeflecht (104) aufweist, welches flachgedrückt ist und in einen Matrixkunststoff (106) eingebettet ist.

14. Luft- oder Raumfahrzeug mit einem Kunststoffprofilteil (102, 103, 103') nach Anspruch 13.

15. Vorrichtung (100) zur Herstellung eines faserverstärkten Kunststoffprofilteils (102, 103), mit:
einer Zuführeinrichtung (112, 116), welche ein schlauchförmiges Fasergeflecht (104) zuführt, in welchem ein Matrixkunststoff (106) verteilt angeordnet ist;
einer Presse (108), welche das zugeführte Fasergeflecht (104) intermittierend auf einem Längenabschnitt (L) in ein Zielprofil (200) presst;
einer Heizeinrichtung (400) zum Heizen der Presse (108); und
einer Zieheinrichtung (110), welche das Fasergeflecht (104) intermittierend durch die Presse (108) zieht, wenn das Fasergeflecht (104) von der Presse (108) nicht gepresst wird **dadurch gekennzeichnet, dass** die Zuführeinrichtung (112, 116) eine Flechteinrichtung (112) aufweist, welche das schlauchförmige Fasergeflecht (104) aus einer Vielzahl von Faserfäden (114) flicht.

16. Vorrichtung nach Anspruch 15,
**dadurch gekennzeichnet,**
**dass** die Zuführeinrichtung (112, 116) einen Harzfilmleger (116) aufweist, welcher einen Harzfilm (106) in das schlauchförmige Fasergelege (104) einlegt.

17. Vorrichtung nach Anspruch 15 oder 16,
**dadurch gekennzeichnet,**
**dass** weiterhin eine Vielzahl von Umformrollen (118) vorgesehen ist, welche das schlauchförmige Fasergeflecht (104) allmählich in das Zielprofil (200) umformen.

18. Vorrichtung nach wenigstens einem der Ansprüche 15 bis 17,
**dadurch gekennzeichnet,**
**dass** die Heizeinrichtung (400) dazu ausgebildet ist, den Matrixkunststoff (106) im Längenabschnitt (L) teilweise auszuhärten, wobei weiterhin ein Nachaushärteofen (120) zum vollständigen Nachaushärten des Kunststoffprofilteils (102, 103) vorgesehen ist.

19. Vorrichtung nach wenigstens einem der Ansprüche 15 bis 18,
**dadurch gekennzeichnet,**
**dass** weiterhin eine Entgrateinrichtung (122) vorgesehen ist, welche das Kunststoffprofilteil (102, 103) entgratet.

20. Vorrichtung nach wenigstens einem der Ansprüche 15 bis 19,
**dadurch gekennzeichnet,**
**dass** weiterhin eine Schneideeinrichtung (124) vorgesehen ist, welche das Kunststoffprofilteil (102) wesentlich longitudinal in weitere Kunststoffprofilteile (103, 103') zerschneidet.

## Claims

1. Method for the production of a fibre-reinforced plastics material profiled part (102, 103), comprising the following steps:
supplying a tubular fibre braid (104) in which a polymer matrix (106) is arranged by being distributed therein;
enclosing (402) a longitudinal portion (L) of the fibre braid (104) in a moulding press (108);
heating the moulding press (108);
opening (404) the moulding press (108) to release the fibre braid (104);
drawing the fibre braid (104) through the open moulding press (108) to position a further longitudinal portion (L') of the fibre braid (104) in the moulding press (108); and
enclosing (402) the further longitudinal portion (L') in the moulding press (108), **characterised in that** the supplying of the tubular fibre braid (104) includes a step of braiding the fibre braid (104) from a plurality of fibre threads (114).

2. Method according to claim 1, **characterised in that**, when the moulding press encloses the longitudinal portion (L), it compresses said longitudinal portion (L) according to an intended profile (200) of the plastics material profiled part (102), furthermore a step of gradually reshaping the tubular fibre braid (104) into the intended profile (200) by a plurality of reshaping rollers (118) being provided.

3. Method according to claim 2, **characterised in that** when it is being reshaped, the tubular fibre braid (104) is pressed flat.

4. Method according to at least one of the preceding claims, **characterised in that** a plurality of tubular fibre plies (104, 104') is supplied and jointly enclosed by the moulding press (108) in the longitudinal portion (L).

5. Method according to at least one of the preceding claims, **characterised in that** the polymer matrix (106) is arranged in a distributed manner in the tubular fibre braid (104) by the interlacing of thermoplastic fibres.

6. Method according to at least one of the preceding claims, **characterised in that** the polymer matrix (106) is arranged in the tubular fibre braid (104) by introducing a resin film (106) into the tube (104).

7. Method according to at least one of the preceding claims, **characterised in that** the polymer matrix (106) is arranged in the tubular fibre braid (104) by wetting the fibre braid (104) with a liquid or powdered resin.

8. Method according to at least one of the preceding claims, **characterised in that** the tubular fibre braid (104) is supplied as a prepreg.

9. Method according to at least one of the preceding claims, **characterised in that** the longitudinal portion (L) is cured partially, in particular to approximately 70 %, in the moulding press.

10. Method according to claim 9, **characterised in that** furthermore a step of completely curing the longitudinal portion (L) after it has been drawn through the moulding press (108) is provided.

11. Method according to at least one of the preceding claims, **characterised in that** furthermore a step of deflashing the plastics material profiled part (102, 103) is provided.

12. Method according to at least one of the preceding claims, **characterised in that** furthermore a step of cutting up the plastics material profiled part (102) in a substantially longitudinal manner to form further plastics material profiled parts (103, 103') is provided.

13. Fibre-reinforced plastics material profiled part (102, 103, 103') which is produced by the method according to claim 3, wherein the plastics material profiled part (102, 103, 103') has a tubular fibre braid (104) which is pressed flat and is embedded in a polymer matrix (106).

14. Aircraft or spacecraft which has a plastics material profiled part (102, 103, 103') according to claim 13.

15. Device (100) for the production of a fibre-reinforced plastics material profiled part (102, 103) comprising:
a supply means (112, 116) which supplies a tubular fibre braid (104) in which a polymer matrix (106) is arranged by being distributed therein;
a moulding press (108) which intermittently compresses the supplied fibre braid (104) along a longitudinal portion (L) into an intended profile (200);
a heating means (400) for heating the moulding press (108); and
a drawing means (110) which intermittently draws the fibre braid (104) through the moulding press (108) when the fibre braid (104) is not being compressed by the moulding press (108),
**characterised in that** the supply means (112, 116) has a braiding means (112) which braids the tubular fibre braid (104) from a plurality of fibre threads (114).

16. Device according to claim 15, **characterised in that** the supply means (112, 116) has a resin film laying means (116) which introduces a resin film (106) into the tubular fibre ply (104).

17. Device according to either claim 15 or claim 16, **characterised in that** furthermore a plurality of reshaping rollers (118) is provided, which reshaping rollers (118) gradually reshape the tubular fibre braid (104) into the intended profile (200).

18. Device according to at least one of claims 15 to 17, **characterised in that** the heating means (400) is configured to partially cure the polymer matrix (106) in the longitudinal portion (L), furthermore a post-curing furnace (120) being provided for completely post-curing the plastics material profiled part (102, 103).

19. Device according to at least one of claims 15 to 18, **characterised in that** furthermore a deflashing means (122) is provided which deflashes the plastics material profiled part (102, 103).

20. Device according to at least one of claims 15 to 19, **characterised in that** furthermore a cutting device (124) is provided which cuts up the plastics material profiled part (102) in a substantially longitudinal manner into further plastics material profiled parts (103, 103').

## Revendications

1. Procédé de fabrication d'un profilé en plastique (102, 103) renforcé par des fibres, comprenant les étapes de procédé suivantes :
- introduction d'une tresse de fibres tubulaire (104), dans laquelle une matière plastique à matrice (106) est répartie ;
- enserrement (402) d'une section de longueur (L) de la tresse de fibres (104) dans une presse (108) ;
- chauffage de la presse (108) ;
- ouverture (404) de la presse (108) pour libérer la tresse de fibres (104) ;
- sortie de la tresse de fibres (104) par la presse ouverte (108) pour mettre en place une autre section de longueur (L') de la tresse de fibres (104) dans la presse (108) ; et
- enserrement (402) de l'autre section de longueur (L') dans la presse (108), **caractérisé en ce que** l'introduction de la tresse de fibres tubulaire (104) comprend une étape de tressage de la tresse de fibres (104) à partir d'une multitude de fils de fibres (114).

2. Procédé selon la revendication 1, **caractérisé en ce que** la presse comprime la section de longueur (L) lors de l'enserrement conformément à un profil cible (200) du profilé en plastique (102), une étape de mise en forme progressive de la tresse de fibres tubulaire (104) selon le profil cible (200) étant également prévue par une multitude de rouleaux de mise en forme (118).

3. Procédé selon la revendication 2, **caractérisé en ce que** la tresse de fibres tubulaire (104) est aplatie lors de la mise en forme.

4. Procédé selon au moins une des revendications précédentes, **caractérisé en ce qu'**une multitude de nappes de fibres tubulaires (104, 104') sont introduites et enserrées conjointement par la presse (108) sur une section de longueur (L).

5. Procédé selon au moins une des revendications précédentes, **caractérisé en ce que** la matière plastique à matrice (106) est répartie dans la tresse de fibres tubulaire (104) en entrelaçant des fibres thermoplastiques.

6. Procédé selon au moins une des revendications précédentes, **caractérisé en ce que** la matière plastique à matrice (106) est disposée dans la tresse de fibres tubulaire (104) en insérant un film de résine (106) dans le tube (104).

7. Procédé selon au moins une des revendications précédentes, **caractérisé en ce que** la matière plastique à matrice est disposée dans la tresse de fibres tubulaire (104) en humidifiant la tresse de fibres (104) avec une résine liquide ou poudreuse.

8. Procédé selon au moins une des revendications précédentes, **caractérisé en ce que** la tresse de fibres tubulaire (104) est introduite sous forme de pré-imprégné.

9. Procédé selon au moins une des revendications précédentes, **caractérisé en ce que** la section de longueur (L) est durcie dans la presse partiellement, en particulier à environ 70%.

10. Procédé selon la revendication 9, **caractérisé en ce qu'**une étape de durcissement complet de la section de longueur (L) est également prévue après la sortie par la presse (108).

11. Procédé selon au moins une des revendications précédentes, **caractérisé en ce qu'**une étape d'ébavurage du profilé en plastique (102, 103) est également prévue.

12. Procédé selon au moins une des revendications précédentes, **caractérisé en ce qu'**une étape de découpage sensiblement longitudinal du profilé en plastique (102) permettant la formation d'autres profilés en plastique (103, 103') est également prévue.

13. Profilé en plastique renforcé par des fibres (102, 103, 103'), lequel est fabriqué selon la revendication 3, le profilé en plastique (102, 103, 103') présentant une tresse de fibres tubulaire (104) qui est aplatie et noyée dans une matière plastique à matrice (106).

14. Aéronef ou engin spatial doté d'un profilé en plastique (102, 103, 103') selon la revendication 13.

15. Dispositif (100) de fabrication d'un profilé en plastique renforcé par des fibres (102, 103), comprenant :
- un système d'introduction (112, 116), qui introduit une tresse de fibres tubulaire (104) dans laquelle une matière plastique à matrice (106) est répartie ;
- une presse (108), qui comprime la tresse de fibres introduite (104) de façon intermittente sur une section de longueur (L) selon un profil cible (200) ;
- un système de chauffage (400) permettant de chauffer la presse (108) ; et
- un système de traction (110), qui fait sortir la tresse de fibres (104) par la presse (108) de façon intermittente lorsque la tresse de fibres (104) n'est pas comprimée par la presse (108)
**caractérisé en ce que** le système d'introduction (112, 116) présente un système de tressage (112), qui tresse la tresse de fibres tubulaire (104) à partir d'une multitude de fils de fibres (114).

16. Dispositif selon la revendication 15, **caractérisé en ce que** le système d'introduction (112, 116) présente un dispositif d'insertion de film de résine (116), qui insère un film de résine (106) dans la nappe de fibres tubulaire (104).

17. Dispositif selon la revendication 15 ou 16, **caractérisé en ce qu'**une multitude de rouleaux de mise en forme (118), qui mettent progressivement en forme la tresse de fibres tubulaire (104) selon le profil cible (200), est également prévue.

18. Dispositif selon au moins une des revendications 15 à 17, **caractérisé en ce que** le système de chauffage (400) est conçu pour durcir partiellement la matière plastique à matrice (106) sur une section de longueur (L), un four de post-durcissement (120) destiné au post-durcissement complet du profilé en plastique (102, 103) étant également prévu.

19. Dispositif selon au moins une des revendications 15 à 18, **caractérisé en ce qu'**un dispositif d'ébavurage (122), qui ébavure le profilé en plastique (102, 103), est également prévu.

20. Dispositif selon au moins une des revendications 15 à 19, **caractérisé en ce qu'**un système de découpage (124), qui découpe le profil en plastique (102) en d'autres profilés en plastique (103, 103') de façon sensiblement longitudinale, est également prévu.
